# EUROPÄISCHE PATENTSCHRIFT

(11) **EP 3 219 660 B1**
(45) Veröffentlichungstag und Bekanntmachung des Hinweises auf die Patenterteilung: **29.04.2020**
(21) Anmeldenummer: 17000373.5
(22) Anmeldetag: 08.03.2017
(51) Int. Cl.: B66C 23/44, B66C 3/12, B66C 1/58, B66C 23/70

(54) **KRAN, WELCHER AUF EINER FAHRBAREN ARBEITSMASCHINE FÜR FORSTARBEIT ANZUBRINGEN IST**
CRANE, WHICH IS FIXED ON A MOBILE WORK MACHINE FOR FORESTRY
GRUE À FIXER SUR UN ENGIN DE TRAVAIL MOBILE POUR TRAVAUX FORESTIERS

(30) Priorität: 15.03.2016 AT 1392016
(43) Veröffentlichungstag der Anmeldung: 20.09.2017
(73) Patentinhaber: Haselsteiner, Wolfgang, 3341 Ybbsitz (DE)
(72) Erfinder: Haselsteiner, Richard, 3341 Ybbsitz (DE); Haselsteiner, Wolfgang, 3341 Ybbsitz (DE)

(56) Entgegenhaltungen:
- CA-A1- 2 530 342
- US-A- 4 373 853
- US-A- 4 917 567
- US-A1- 2003 014 887

## Beschreibung

Die Erfindung betrifft einen Kran, welcher auf einer fahrbaren Arbeitsmaschine für Forstarbeit anzubringen ist, mehrgliedrig ist, eine Aufnahmevorrichtung für einen Lastgreifer aufweist und mit einer Seilwinde ausgestattet ist.

Mit "fahrbare Arbeitsmaschine" ist dabei typischerweise ein Traktor oder ein Raupenfahrzeug oder ein Holzernteanhänger gemeint. Unter "mehrgliedriger Kran" ist in diesem Dokument jeweils ein Kran gemeint, welcher neben einer auf der fahrbaren Arbeitsmaschine verankerten Basis zumindest zwei miteinander verkettete Arme, nämlich einen Knickarm und einen Hauptarm aufweist. Dabei befindet sich am freien Ende des sogenannten Knickarms eine Vorrichtung für das lösbare Befestigen eines antreibbaren Arbeitsgerätes wie beispielsweise eines Ladegreifers oder einer Baggerschaufel. Mit dem zweiten Ende ist der Knickarm schwenkbar am Hauptarm befestigt. Der Hauptarm ist üblicherweise direkt an der auf dem Chassis der Arbeitsmaschine verankerten Basis des Krans um zwei Achsen schwenkbar gelagert gehalten.

Es ist üblich, fahrbare Arbeitsmaschinen für die Forstarbeit zumindest mit einer Seilwinde und mit einem mehrgliedrigen Kran auszustatten.
Die AU 2010202945 A1 zeigt ein Beispiel für eine für Forstarbeit vorgesehen Arbeitsmaschine bei welcher mehrgliedriger Kran und Seilwinde voneinander vollkommen unabhängig zu betätigen sind. Im Nahbereich der Arbeitsmaschine werden die Stämme bzw. Bäume mit Hilfe des am Kran befindlichen Ladegreifers manövriert. Die Seilwinde wird vor allem dazu verwendet, Baumstämme oder gefällte Bäume über mittlere Entfernungen zu bewegen, typischerweise an die Arbeitsmaschine heranzuziehen oder sie unter Anwendung einer ortsfest von der Arbeitsmaschine entfernt verankerten Umlenkrolle von der Arbeitsmaschine weg zu ziehen.

Die DE 1277621 B schlägt eine sehr spezielle Bau- und Funktionsweise einer mit einem teleskopierbaren Auslegerarm, Ladegreifer und Seilwinde ausgestatteten fahrbaren Arbeitsmaschine für Forstarbeit vor. Der Ladegreifer ist am freien Ende des Auslegerarms zu sehr einfacher Lösbarkeit aufgesteckt. Eine Seilwinde ist am Chassis der Arbeitsmaschine befestigt und das Seil ist über mehrere am Auslegerarm angeordnete Seilrollen zum Ladegreifer geführt und mit diesem verbunden. Bei der bestimmungsgemäßen Arbeit wird der Ladegreifer durch den Auslegerarm an einem zu fällenden Baum angesetzt und daran fixiert. Durch den Auslegerarm wird in der gewünschten Fallrichtung des Baumes an diesen gedrückt, wobei die Seilwinde im Freilaufzustand ist und der Lastgreifer nur durch den Druck zwischen Auslegerarm und Baum am Auslegerarm hält. Nun wird der Baum gefällt, d.h. unterhalb des Angriffspunkts des Auslagerarms durchgeschnitten oder einfach durch Druck durch den Auslegerarm umgeworfen. Beim Fallen des Baumes löst sich der am Baum fixierte Ladegreifer vom Auslegerarm. Nachdem der Baum liegt, wird der Ladegreifer mit Hilfe des immer noch mit ihm verbundenen Seils wieder an den Auslegerarm herangezogen - und mit dem Ladegreifer auch der Baum. Die Bau- und Arbeitsweise hat sich nicht durchgesetzt. Die CA 2530342 A1 offenbart einen Kran gemäß dem Oberbegriff des unabhängigen Anspruchs 1.

Üblicherweise wird als Ergänzung zu mehrgliedrigen Kränen für fahrbare Arbeitsmaschinen für Forstarbeit auch der Anbau einer Seilwinde auf den Hauptarm des Krans angeboten. Ein Beispiel dafür ist im Internet unter der Adresse http://foresttrailer.com/de/ct/ct-38-6-3/ zu sehen (Stand 29.2.2016). Die Windentrommel wird dabei an der dem Chassis zugewandten Seite des Hauptarms befestigt. Das Windenseil wird nur am Hauptarm entlang bis in den Bereich des zweiten Endes des Hauptarms geführt und ist über eine dort angeordnete Seilrolle abwickelbar bzw. einziehbar. D.h. der Knickarm wird nicht mit dem Seil belastet und der Seilverlauf ist unabhängig von der Stellung des Knickarms. Das bringt die Vorteile, dass durch das Seil relativ starke Zugkräfte aufgebracht werden können ohne den Kran zu überlasten und dass sich Bewegung des Krans nicht auf die Seillänge zwischen Lasthaken und Anhängepunkt am Kran auswirkt- womit die Steuerung einfach bleibt. Es bringt den Nachteil, dass die Position des Anhängepunktes am Kran relativ zum Chassis der fahrbaren Arbeitsmaschine nur in einem recht begrenzten Bereich einstellbar ist.

Die der Erfindung zu Grunde liegende Aufgabe besteht darin, einen auf einer fahrbaren Arbeitsmaschine für Forstarbeit anzubringenden mehrgliedrigen Kran mit Seilwinde bereitzustellen. Verglichen mit den zuvor besprochenen Bauweisen von gattungsgemäßen Kränen soll die zulässige Höchstzugkraft der Seilwinde nicht zwangsweise niedriger sein müssen und auch die Steuerung soll nicht zwangsweise komplizierter sein, aber dennoch soll der Anhängepunkt (also jener Punkt von welchem aus das Seil vom Kran weg zur Last hin verläuft) relativ zur Basis des Krans in einem weiteren Bereich verstellbar sein.

Diese Aufgabe wird durch einen Kran nach dem unabhängigen Anspruch 1 gelöst. Zum Lösen der Aufgabe wird vorgeschlagen, den Anhängepunkt am freien Ende des Knickarms anzubringen - also dort wo beispielsweise auch ein Lastgreifer befestigt ist - und auch die Seilwinde selbst am Knickarm an einem relativ zum Anhängepunkt unbeweglichen Teil anzubringen.

Indem das freie Ende des Knickarms wesentlich weiter und flexibler relativ zum Chassis des Krans und damit zur Position der fahrbaren Arbeitsmaschine verstellbar ist, als das von der fahrbaren Arbeitsmaschine abgewandte Ende des Hauptarms, ist natürlich auch der Anhängepunkt an die Seilwinde weiter und flexibler verstellbar.

Indem die Seilwinde am Knickarm gegenüber dem Anhängepunkt unverschiebbar angeordnet ist, ist die gespannte Seillänge zwischen Anhängepunkt und Seilwinde unabhängig von Bewegungen des Krans, womit gegenüber anderen Ausführungen die Steuerung recht einfach sein kann.

Durch eine einfache, leicht durchführbare Maßnahme ist es auch möglich, durch die Seilwinde höchste Zugkraft über das Seil auf die am Lasthaken hängende Last aufzubringen, ohne dabei durch die Tragfähigkeit des Krans begrenzt zu sein. Die Maßnahme besteht darin, das freie Ende des Knickarms an ortsfesten Objekten in der Umgebung der fahrbaren Arbeitsmaschine dagegen abzustützen, dass es in Seilrichtung auf die durch das Seil zu ziehende Last hin bewegt wird.

Beim typischen Einsatzfall im Forst kann mit Hilfe der Seilwinde Holz, welches mit dem Ladegreifer nicht erreichbar ist, durch die Seilwinde genau an den Ladegreifer herangezogen werden. Der Ladegreifer kann bei dieser Arbeitsweise bedarfsweise dazu verwendet werden, das Ende des Knickarms zu fixieren, indem er beispielsweise einen kräftigen, noch im Boden verwurzelten Baumstrunk umfasst, sodass so gut wie keine Reaktionskräfte auf den Seilzug vom Knickarm an den Hauptarm abgeleitet werden müssen.

Die Erfindung wird an Hand einer Zeichnung veranschaulicht.

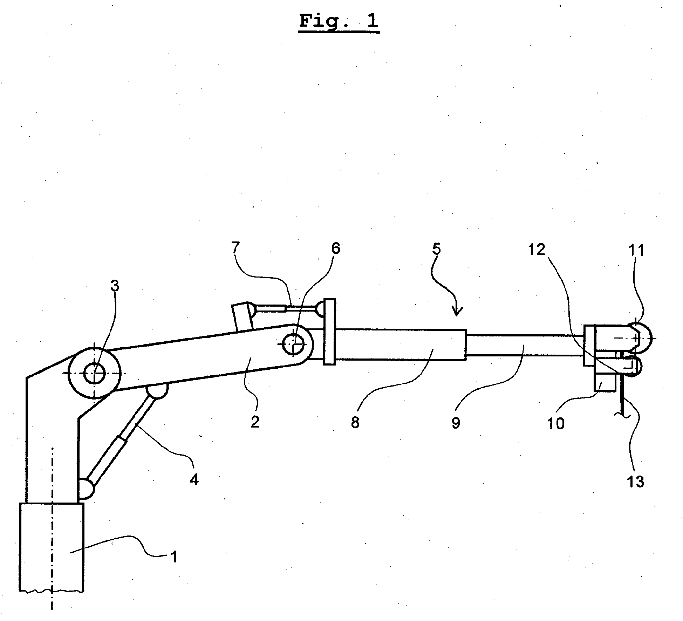

Fig. 1: zeigt stark stilisiert in Seitenansicht einen beispielhaften erfindungsgemäßen mehrgliedrigen Kran

Der in Fig. 1 skizzierte Kran weist eine Basis 1 auf, welche beispielsweise die Form einer vertikalen Säule hat und bestimmungsgemäß starr mit dem Chassis einer für Forstarbeit vorgesehenen fahrbaren Arbeitsmaschine verbunden ist. An der Basis 1 ist der Hauptarm 2 an einem seiner beiden Enden schwenkbar gelagert befestigt. Gegenüber der Basis 1 ist der Hauptarm 2 um eine vertikale Achse und eine horizontale Achse 3 schwenkbar. Schwenkbewegung um die horizontale Achse 3 ist durch einen Hydraulikzylinder 4 antreibbar bzw. blockierbar, welcher exzentrisch bezüglich der Achse 3 jeweils schwenkbar einerseits mit dem Hauptarm 2, andererseits mit einem um die vertikale Achse schwenkbaren Teil der Basis 1 verbunden ist.

Weiters weist der Kran einen Knickarm 5 auf, welcher an einem seiner beiden Enden mit dem von der Basis 1 abgewandt liegenden Ende des Hauptarms 2 schwenkbar verbunden ist, wobei die Achse 6 der Schwenkbarkeit horizontal ausgerichtet ist. Schwenkbewegung des Knickarms 5 gegenüber dem Hauptarm 2 ist durch einen Hydraulikzylinder 7 antreibbar bzw. blockierbar, welcher exzentrisch bezüglich der Achse 6 jeweils schwenkbar einerseits mit dem Hauptarm 2, andererseits mit dem Knickarm 5 verbunden ist.

Der Knickarm 5 weist zwei ineinander teleskopierbare Teilarme 8, 9 auf, wobei der äußere Teilarm 8 gegenüber der Achse 6 am Hauptarm 2 nur schwenkbar aber nicht in Längsrichtung verschiebbar ist und wobei der innere Teilarm 9 in seiner und des äußeren Teilarms Längsrichtung bezüglich der Achse 6 auch radial verschiebbar ist. (Der die Radialbewegung antreibende Hydraulikzylinder ist in Fig. 1 nicht sichtbar)
Am vom Hauptarm 2 abgewandten "freien" Ende des Teilarms 9 ist der Knickarm 5 mit einer Montagebasis 10 ausgestattet, an welcher ein antreibbares Arbeitsgerät wie typischerweise ein Ladegreifer befestigbar ist. Üblicherweise ist zwischen der Montagebasis 10 und dem Arbeitsgerät noch eine Verbindungsbaugruppe angeordnet, welche es ermöglicht das Arbeitsgerät gegenüber der Montagebasis 10 um eine oder zwei Achsen zu schwenken.

Erfindungsgemäß ist vorgesehen, dass im Nahbereich des freien Endes des Knickarms 5, was im Fall des skizzierten teleskopierbaren Knickarms gleichbedeutend ist mit dem freien Ende des längsverschiebbaren Teilarms 9, eine Seilwinde 11 befestigt ist, und dass auch der zur Seilwinde 11 gehörige Anhängepunkt 12, an welchem das Seil 13 vom Kran weg verläuft, im Bereich des freien Endes des Knickarms 5 liegt.

Typischerweise ist die Seilwinde 11 hydraulisch angetrieben. Die dazu erforderlichen Hydraulikleitungen sind - wie alle anderen erforderlichen Hydraulikleitungen - in Fig. 1 nicht eingezeichnet.

Es ist angesichts von Fig. 1 offensichtlich, dass der Anhängepunkt 12 dadurch, dass er sich im Bereich des freien Endes des Knickarms 5 befindet, gegenüber der Basis 1 (und damit gegenüber dem die Basis 1 tragenden Fahrzeug) flexibler und weiter bewegbar ist als wenn er wie den gemäß dem Stand der Technik üblichen Bauweisen im Nahbereich der Achse 6 am Hauptarm 2 angebracht wäre. Indem der Knickarm 5 mit seinem freien Endbereich, konkret mit der Montagebasis 10 oder mit dem an dieser befestigten (nicht dargestellten) Werkzeug an ortsfesten Gegenständen, wie beispielsweise einem Baumstamm abgestützt wird, kann von der Seilwinde 11 aus durch das Seil 13 erheblicher Zug auf eine am freien Ende des Seils angehängte Last ausgeübt werden, ohne dass störend große Reaktionskräfte vom Knickarm 5 aus in den Hauptarm 2 und weiter an die Basis 1 eingeleitet werden müssen. In der Versuchspraxis hat sich zudem gezeigt, dass der häufigste Anwendungsfall für die Seilwinde 11 der ist, dass Holz, welches sich nur ein kleines Stück außerhalb der Reichweite des an der Montagebasis 10 befestigten Lastgreifers befindet, mit Hilfe der Seilwinde 11 und des Seils 13 an den Lastgreifer herangezogen wird. In fast allen diesen Anwendungsfällen können Hauptarm 2 und Knickarm 5 parallel zur Zugrichtung des Seils 13 ausgerichtet werden und dann gezogen werden. Bei dieser Betriebsweise können auch ohne separate Abstützung des freien Endes des Knickarms 5 an starren ortsfesten Gegenständen, so hohe Zugkräfte am Seil 13 angewendet werden, wie wenn der Anhängepunkt am Hauptarm 2 wäre.

Bei einer typischen Auslegung der Seilwinde 11 hat diese ein Gewicht von etwa 30 kg. Dieses Gewicht fällt bei Kränen der beschriebenen Bauart für den beschriebenen Einsatzzweck auch dann nicht ins Gewicht, wenn die Seilwinde wie erfindungsgemäß vorgesehen am freien Ende des Knickarms 5 angeordnet ist.

Die Seilwinde 11 sowie die den Anhängepunkt 12 definierende Vorrichtung sind bevorzugt starr aber lösbar am freien Endbereich des Knickarms 5, typischerweise an der Montagebasis 10 befestigt. Typischerweise kann diese Befestigung mittels Schrauben erfolgen, mit Hilfe derer die Seilwinde 11 bzw. die besagte Vorrichtung an den Knickarm bzw. die Montagebasis 10 angedrückt werden.

Bei der praktischen Arbeit des mit der Seilwinde 11 ausgestatteten Krans reicht es durchaus aus, wenn jeweils immer nur entweder die Seilwinde 11 oder der Lastgreifer angetrieben werden muss. Daher ist es vorteilhaft, für den Antrieb der beiden Geräte nur einen gemeinsamen Hydraulikkreis vorzusehen, und in diesem Hydraulikreis eine Umschaltmöglichkeit vorzusehen, mit Hilfe derer einstellbar ist, ob Fluss von Hydraulikflüssigkeit in dem Hydraulikreis entweder über den Antrieb (Hydraulikmotor) für die Seilwinde 11 geführt wird oder über den Antrieb (Hydraulikzylinder) für den Lastgreifer, was gleichbedeutend damit ist, dass mit dem Fluss im Hydraulikkreis entweder die Seilwinde 11 oder der Lastgreifer angetrieben wird.

Im Rahmen des fachmännischen Handelns gibt es schon eine Vielzahl von Möglichkeiten die Hydrauliksteuerung so aufzubauen, diese Umschaltmöglichkeit zwischen "Antrieb Seilwinde" und "Antrieb Lastgreifer" zu realisieren.

Besonders vorteilhaft ist es, wenn für dieses Umschalten nicht ein eigener Steuerungshebel mit eigenem Ölkreislauf erforderlich ist, sondern wenn dieses Umschalten durch Zustände der Antriebe und der angetriebenen Geräte selbst auslösbar ist.

Gemäß einer vorteilhaften Ausführung dazu ist das Umschalten vom Betrieb "Antrieb Lastgreifer" auf "Antrieb Seilwinde" dadurch auslösbar, dass die Öffnungsbewegung des Lastgreifer so lange angetrieben wird, bis die Backen des Lastgreifers in maximal offenem Winkel an einem Anschlag anstehen, der Druck der Hydraulikflüssigkeit in weiterer Folge einen Schwellwert überschreitet und dadurch einen Schaltvorgang an einem druckabhängigen Ventil auslöst. Durch den Schaltvorgang am Ventil wird in weiterer Folge Fluss der Hydraulikflüssigkeit nicht mehr durch den Antrieb des Lastgreifers geleitet, sondern durch den Antrieb der Seilwinde. Die Steuerung kann weiters so aufgebaut sein, dass das Umschalten in den vorherigen Zustand (Antrieb Lastgreifer) dadurch auslösbar ist, dass der Druck der Hydraulikflüssigkeit im antreibenden Hydraulikkreislauf unter einen unteren Schwellwert sinkt und der Fluss der Hydraulikflüssigkeit beispielsweise durch Schließen des typischerweise von Hand betätigten Steuerventils, welches den besagten Hydraulikkreislauf "Antrieb Seilwinde" und "Antrieb Lastgreifer" steuert, unterbrochen wird.

## Patentansprüche

1. Kran, welcher auf einer fahrbaren, Arbeitsmaschine für Forstarbeit anzubringen ist, wobei der Kran eine auf der fahrbaren Arbeitsmaschine verankerte Basis (1) einen an dieser schwenkbar befestigten Hauptarm (2) und einen am freien Ende des Hauptarms (2) schwenkbar befestigten Knickarm (5) aufweist, wobei das freie Ende des Knickarms (2) dazu ausgelegt ist einen Ladegreifer lösbar zu befestigen, und wobei am Kran eine Seilwinde (11) befestigt ist, von welcher aus ein Seil (13) zu einer durch das Seil zu ziehenden Last spannbar ist, wobei die einen Anhängepunkt (12) - also jenen Punkt von welchem aus das Seil (13) vom Kran weg zu der Last hin verlauft - definierende Vorrichtung im Nahbereich des freien Endes des Knickarms (5) am Knickarm (5) befestigt ist,
wobei der Knickarm (5) zwei ineinander teleskopierbare Teilarme (8, 9) aufweist, wobei der eine Teilarm (8) gegenüber dem Hauptarm (2) nur um jene Achse (6) schwenkbar ist um welche der Knickarm (5) gegenüber dem Hauptarm (2) schwenkbar ist, und wobei der zweite Teilarm (9) in seiner Längsrichtung radial bezüglich der Achse (6) Verschiebbar ist, **dadurch gekennzeichnet, dass** gleichzeitig mit dem Ladegreifer auch die Seilwinde (11) im Nahbereich des freien Endes des zweiten Teilarms (9) befestigt ist.

2. Kran nach Anspruch 1, **dadurch gekennzeichnet, dass** der Ladegreifer und die Seilwinde (11) durch einen gemeinsamen Hydraulikkreis antreibbar sind, wobei die beiden Geräte nicht gleichzeitig antreibbar sind und wobei umschaltbar ist, ob Hydraulikflüssigkeit durch den Antrieb des Ladegreifers oder durch den Antrieb der Seilwinde (11) fließt.

3. Verfahren für den Betrieb eines Kranes nach Anspruch 2, **dadurch gekennzeichnet, dass** das Umschalten vom Antrieb des Ladegreifers auf den Antrieb der Seilwinde (11) dadurch ausgelöst wird, dass Öffnungsbewegung der Backen des Lastgreifers angetrieben wird, bis weitere Öffnungsbewegung der Backen an einem Anschlag blockiert wird, und darauffolgender Druckantrieb der Hydraulikflüssigkeit einen Schaltvorgang in einem druckabhängigen Ventil auslöst.

## Claims

1. A crane which is to be mounted on a mobile machine for forestry work, wherein the crane has a base (1) anchored to the mobile machine, a main arm (2) pivotally secured thereto, and an articulated arm (5) pivotally secured to the free end of the main arm (2), wherein the free end of the articulated arm (2) is configured to releasably secure a loading grab, and wherein a cable winch (11) is secured to the crane, from which a cable (13) is tetherable to a load to be pulled by the cable, wherein the device defining an attachment point (12) - i.e., the point from which the cable (13) extends away from the crane towards the load - is secured to the articulated arm (5) in the vicinity of the free end of the articulated arm (5), wherein the articulated arm (5) has two mutually telescopic sub-arms (8, 9), wherein the one sub-arm (8) is only pivotable relative to the main arm (2) about the axis (6) about which the articulated arm (5) is pivotable relative to the main arm (2), and wherein the second sub-arm (9) is radially displaceable with respect to the axis (6) in its longitudinal direction,
**characterised in that**
together with the loading grab, the cable winch (11) is also secured in the vicinity of the free end of the second sub-arm (9) .

2. The crane according to claim 1, **characterised in that** the loading grab and the cable winch (11) are drivable by a common hydraulic circuit, wherein the two devices are not drivable simultaneously, and wherein it is switchable whether hydraulic fluid flows through the drive of the loading grab or through the drive of the cable winch (11).

3. A method of operating a crane according to claim 2, **characterised in that** the switching from driving the loading grab to driving the cable winch (11) is triggered by an opening motion of the jaws of the loading grab being driven until any further opening motion of the jaws is blocked at a stop, and a subsequent pressure drive of the hydraulic fluid triggers a switching operation in a pressure-dependent valve.

## Revendications

1. Grue destinée à être montée sur une machine de travail mobile pour les travaux forestiers, la grue comprenant une base (1) ancrée sur la machine de travail mobile sur laquelle est monté un bras principal (2) de façon pivotante. Un bras articulé (5) est monté de façon pivotante sur l'extrémité libre de ce bras principal (2), l'extrémité libre du bras articulé (2) étant adaptée pour monter de manière amovible une pince de chargement. Un treuil à câble (11) est monté sur la grue à partir duquel un câble (13) peut être tendu vers une charge à tirer par le câble et dans lequel le point d'accrochage (12), c'est-à-dire le point à partir duquel le câble (13) s'éloigne de la grue en direction de la charge, est fixé au bras articulé (5) à proximité de son extrémité libre. Le bras articulé (5) présente deux bras partiels (8, 9) pouvant être emboités l'un dans l'autre de manière télescopique, le premier bras partiel (8) ne pouvant pivoter par rapport au bras principal (2) qu'autour de l'axe (6) autour duquel le bras articulé (5) peut pivoter par rapport au bras principal (2), et le deuxième bras partiel (9) pouvant être déplacé dans sa longueur radialement par rapport à l'axe (6), **caractérisé en ce que**, simultanément à la pince de chargement, le treuil à câble (11) est également fixé à proximité de l'extrémité libre du deuxième bras partiel (9).

2. Grue selon la revendication 1, **caractérisée en ce que** la pince de chargement et le treuil à câble (11) peuvent être entrainés par un circuit hydraulique commun. Toutefois, les deux dispositifs ne peuvent pas être entraînés simultanément, le liquide hydraulique pouvant circuler, au choix, par l'entraînement de la pince de chargement ou par l'entraînement du treuil à câble (11).

3. Procédé d'actionnement d'une grue selon la revendication 2, **caractérisé en ce que** la commutation de l'entrainement de la pince à chargement vers l'entrainement du treuil à câble (11) est déclenchée par un mouvement d'ouverture des mors de la pince à chargement jusqu'à ce que la poursuite du mouvement d'ouverture des mors soit bloquée à une butée et que l'entrainement par pression du liquide hydraulique consécutif déclenche une opération de commutation dans une valve sensible à la pression.
